# EUROPÄISCHE PATENTSCHRIFT

(11) **EP 1 293 404 B1**
(45) Veröffentlichungstag und Bekanntmachung des Hinweises auf die Patenterteilung: **26.11.2008**
(21) Anmeldenummer: 02012757.7
(22) Anmeldetag: 08.06.2002
(51) Int. Cl.: B60S 1/34

(54) **Wischerarm sowie Scheibenwischvorrichtung, insbesondere für ein Kraftfahrzeug**
Wiper arm and windscreen wiper device, in particular for a vehicle
Bras d'essuie-glace et dispositif d'essuie-glace, en particulier pour un véhicule

(30) Priorität: 02.08.2001 DE 10138003
(43) Veröffentlichungstag der Anmeldung: 19.03.2003
(73) Patentinhaber: ROBERT BOSCH GMBH, 70442 Stuttgart (DE)
(72) Erfinder: Heinrich, Laurent, 67400 Illkirch-Graffenstaden (FR); Lorenz, Karlheinz, 76534 Baden-Baden (DE)

(56) Entgegenhaltungen:
- EP-A- 0 161 168
- WO-A-99/10210
- FR-A- 2 725 414
- US-A- 5 860 186

## Beschreibung

### Stand der Technik

Die Erfindung betrifft einen Wischerarm und eine Scheibenwischvorrichtung, insbesondere für ein Kraftfahrzeug, nach Gattung der unabhängigen Ansprüche.

Es sind schon zahlreiche Wischerarme für Scheibenwischvorrichtungen mit einem Viergelenk, beispielsweise aus der DE 44 44 066 A1 bekannt. Der Wischerarm besteht bei diesen Scheibenwischvorrichtungen aus einem Gelenkteil, an das zumindest mittelbar ein Wischblatt angelenkt ist und einem Befestigungsteil, welches den Wischerarm mit der sich im Betrieb pendelnd bewegenden Wischerwelle verbindet. Das Befestigungsteil besteht im wesentlichen aus einem kurzen länglichen Abschnitt der an einem Ende drehbeweglich mit dem Gelenkteil verbunden ist. Am Befestigungsteil sind zwei Kurbein angelenkt von denen eine durch einen Wischerantrieb pendelnd angetrieben wird und die andere blind an der Scheibenwischvorrichtung oder an der Fahrzeugkarosserie befestigt ist und der Huberzeugung dient.

Ein gattungsgemäßer Wischerarm ist aus der EP-A-0961168 bekannt.

Da zwischen den Kurbeln und dem Befestigungsteil sehr große Kräfte zu übertragen sind, müssen Kurbeln und Befestigungsteil in diesem Bereich besonders stabil ausgebildet sein und weisen daher eine relativ große Bauhöhe auf.

### Vorteile der Erfindung

Der erfindungsgemäße Wischerarm mit den Merkmalen des Hauptanspruchs hat den Vorteil, dass durch die Anordnung der beiden Kurbeln zwischen zwei Platten als Befestigungsteil eine geringere Bauhöhe des Wischerarms erzielt wird. Dadurch wird die Aerodynamik der Scheibenwischvorrichtung verbessert und Windgeräusche der Scheibenwischvorrichtung reduziert.

Durch die in den Unteransprüchen aufgeführten Maßnahmen ergeben sich vorteilhafte Weiterbildungen und Verbesserungen der im Hauptanspruch angegebenen Merkmale.

Sind die beiden Platten mittels eines Abstandsstutzens miteinander verbunden so werden die Lagerkräfte reduziert und die Lebensdauer des Wischerarms weiter erhöht.

Besonders vorteilhaft ist es, wenn eine der Platten eine Bohrung aufweist in die ein Bolzen eingreift der mindestens eine Kurbel drehbar lagert. Dadurch wird der Bolzen sicher zwischen den Platten gehalten und ist in der Serienfertigung leicht einzusetzen.

Durchgreift der Bolzen zumindest einer der Platten in voller Länge und ist auf der der kurbelabgewandten Seite der Platte befestigt, so findet der Bolzen sicheren Halt und kann in der Serienfertigung auf einfache Weise, beispielsweise durch Einstecken und Festnieten an der Platte befestigt werden.

Gußteile sind kostengünstig herzustellen und Taschen zur Aufnahme der Bolzen oder Abstandsstutzen können einfach - durch die große Freiheit in der Formgebung - in die Platte integriert werden.

Weiterhin ist es vorteilhaft, wenn mindestens ein Bolzen in ein Kugellager eingedrückt ist und das Kugellager in eine Aussparung der Kurbel eingedrückt ist. Auf diese Weise ist das Lager direkt in der Kurbel integriert wodurch die Bauhöhe weiter reduziert werden kann.

Die erfindungsgemäße Scheibenwischvorrichtung mit den Merkmalen des Anspruchs 7 hat den Vorteil, dass sie auch in Fahrzeuge einbaubar ist, bei denen eine niedrige Bauhöhe des Wischerarms benötigt wird.

### Zeichnungen

Ein Ausführungsbeispiel der Erfindung ist in den Zeichnungen dargestellt und in der nachfolgenden Beschreibung näher erläutert.

Es zeigen:
Figur 1 eine schematische Darstellung einer Scheibenwischvorrichtung,
Figur 2 ein Unterteil eines erfindungsgemäßen Wischerarms in einer perspektivischen Darstellung,
Figur 3 ein Oberteil eines erfindungsgemäßen Wischerarms in einer perspektivischen Darstellung,
Figur 4 einen Schnitt durch einen erfindungsgemäßen Wischerarm und
Figur 5 einen erfindungsgemäßen Wischerarm in einer perspektivischen Darstellung.

### Beschreibung des Ausführungsbeispiels

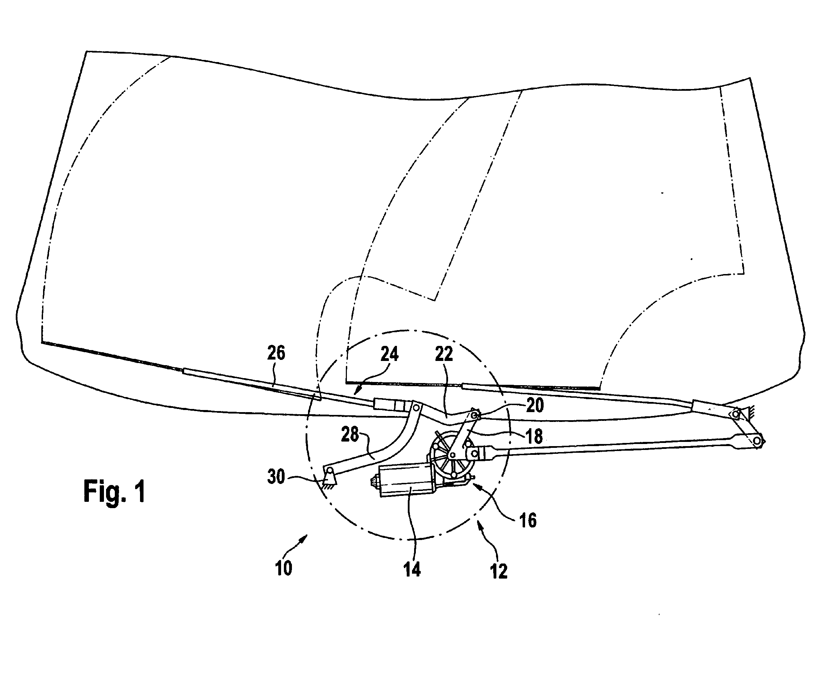

Figur 1 zeigt eine Scheibenwischvorrichtung 10 mit einem Viergelenk 12. Die Scheibenwischvorrichtung 10 besteht im wesentlichen aus einem Antriebsaggregat 14 welches über das Viergelenk 12 einen Wischerarm 24 pendelnd anzutreiben vermag. Der Wischerarm 24 ist von länglicher Gestalt und weist ein Gelenkteil 26 und ein Befestigungsteil 22 auf, mit dem er am Viergelenk 12 über zwei Kurbeln 18, 28 angelenkt ist. Weiters ist der Wischerarm 24 an seinem, dem Befestigungsteil 22 abgewandten Ende mit einem Wischblatt 13 gelenkig verbunden.

Das Antriebsaggregat 14 ist typischerweise als Elektromotor mit einem Schneckenradgetriebe 16 ausgebildet, welches eine erste Kurbel 18 des Viergelenks 12 der Scheibenwischvorrichtung 10 antreibt. Die erste Kurbel 18 ist mit ihrem abtriebigen Ende 20 mit dem Befestigungsteil 22 am blattabgewandten Ende verbunden.

Die zweite Kurbel 28 ist an einem Ende an einem der Einfachheit halber nicht dargestellten Traggestell - beispielsweise einem Trägerrohr - der Scheibenwischvorrichtung 10 drehbeweglich mittels eines festen Lagers 30 befestigt. Das andere Ende der zweiten Kurbel 28 ist am Befestigungsteil 22, vom abtriebigen Ende 20 der ersten Kurbel 18 beabstandet, angelenkt.

Im Betrieb treten an den Kurbeln 18, 28 insbesondere an den Lagerstellen die diese mit dem Befestigungsteil 22 bilden, sehr große Kräfte auf, weshalb die Anlenkpunkte zwischen den Kurbeln 18, 28 und dem Befestigungsteil 22 entsprechend kräftig dimensioniert sein müssen.

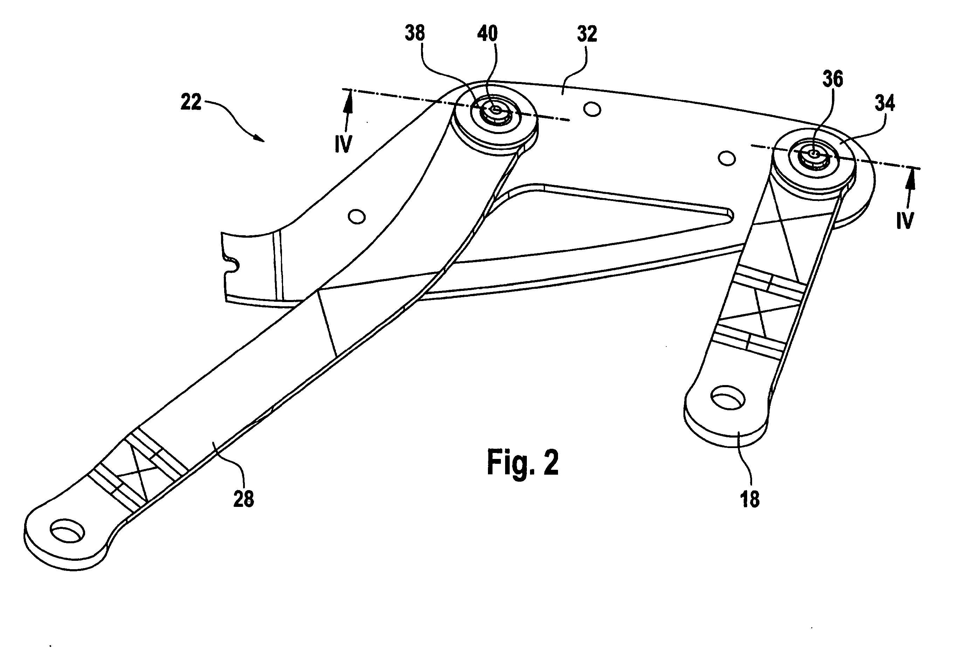

In Figur 2 ist das Unterteil eines Befestigungsteils 22 eines erfindungsgemäßen Wischerarms 24 in perspektivischer Darstellung gezeigt. Die erste Kurbel 18 und die zweite Kurbel 28 sind auf einer ersten Platte 32 drehbeweglich befestigt. Die erste Kurbel 18 weist an ihrem freien Ende ein erstes Lager 34 auf, welches in ein Aussparung an einem Ende der ersten Kurbel 18 eingepresst ist. Dieses Lager umgreift einen ersten Bolzen 36 der wiederum fest in die erste Platte 32 eingepresst ist.

Analog dazu weist die zweite Kurbel 28 an ihrem freien Ende ebenfalls eine Aussparung auf, in das ein zweites Lager 38 eingepresst ist. Dieses zweite Lager 38 umschließt den zweiten Bolzen 40, so dass die zweite Kurbel um den Bolzen 40 drehbar gelagert ist. Typischerweise werden die Lager 34, 38 als abgedichtete Lager ausgebildet, um das Eindringen von Wasser oder Schmutz zu verhindern. Die beiden Bolzen sind in die jeweiligen Lager 34, 38 eingedrückt und diese Lager 34.38 wiederum in die jeweilige Kurbel 18, 28 eingepresst und ringverstemmt.

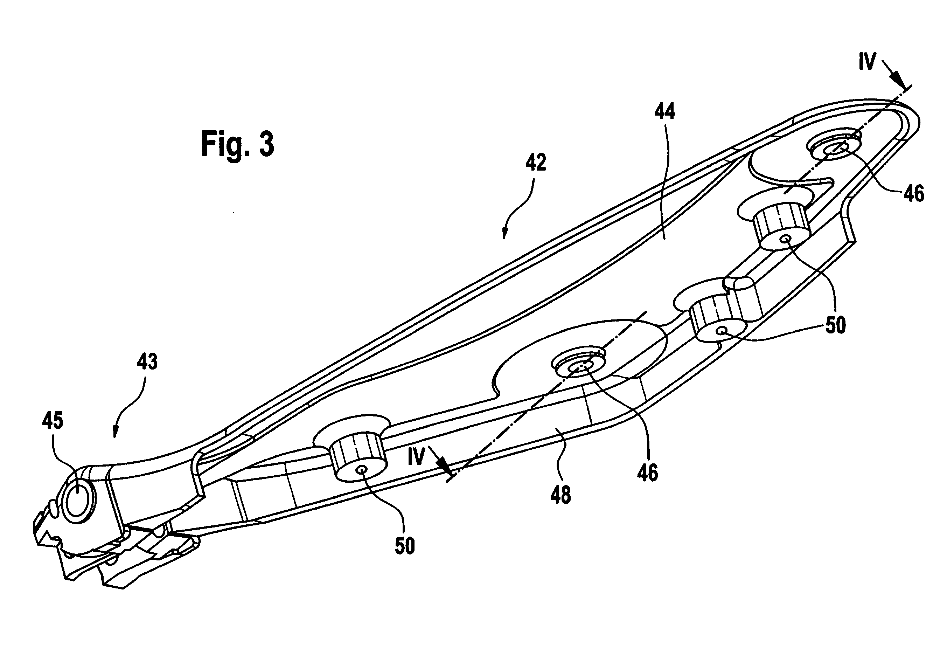

Die Bolzen 36, 40 sind in die erste Platte 32 eingeschlagen und vernietet. Die erste Platte 32 selbst, ist von im wesentlichen dreieckiger Gestalt mit zwei kürzeren Seiten und einer längeren Basis. Die beiden Lager 34, 38 sind im Bereich zweier Ecken des Dreiecks angeordnet, die eine kürzere Seite einschließen. An der dritten Ecke des Dreiecks schließt sich das Gelenkteil 26 des Wischerarms 24 als Verlängerund der Basis des Dreiecks an. (Figur 3)

Um das Gewicht des Wischerarms 24 zu reduzieren kann die erste Platte 32 mit Aussparungen versehen sein, die jedoch so angeordnet werden sollten, das die Stabilität, insbesondere die Torsionssteifigkeit der Platte nicht beeinträchtigt wird.

In Figur 3 ist die zweite Platte 42 des Befestigungsteils 22 in perspektivischer Darstellung gezeigt.

Diese zweite Platte 42 besteht aus einer Deckfläche 44 die in Größe und Form der der ersten Platte 32 entspricht. Zur Aufnahme der Bolzen 36, 40 weist die zweite Platte 42 an den entsprechenden Stellen, also im Bereich einer der basisabgewandten Ecke und der gelenkteilabgewandten Ecke, Taschen 46 auf, die im wesentlichen der Form eines Hohlzylinders entsprechen, so dass die zylinderförmigen Bolzen 36, 40 in diese Taschen 46 eingesteckt werden können. Weiterhin ist die dreieckige Deckfläche 44 auf ihrer basisabgewandten Seiten mit einem Kragen 48 versehen, der gerade so hoch ist, dass die zusammengefügten Platten 32, 42 ein zumindest teilweise verschlossenes Gehäuse bilden.

An dem der ersten Kurbel 18 abgewandten Ende der Basis weist die zweite Platte 42 ein Gelenk 43 auf, an das das Gelenkteil 26 angelenkt ist. Dazu ist in diesem Bereich ein Gelenkteilbolzen 45 zwischen zwei Abschnitten des Kragens 48 eingezogen. Natürlich können auch entsprechende Erhebungen am Kragen 48 angeordnet sein, die sich leicht beim Gießen ausformen lassen.

Der Kragen 48 ist so ausgespart, dass der Bewegungsraum der ersten und zweiten Kurbel 18, 28 nicht behindernd beschnitten ist. Zur Stabilisierung des Abstandes der beiden Platten 32, 42 sind auf der Deckfläche zylinderförmige Erhebungen als Abstandsstutzen 50 angeordnet, die eine Bohrung aufweisen, in die ein Gewinde geschnitten ist.

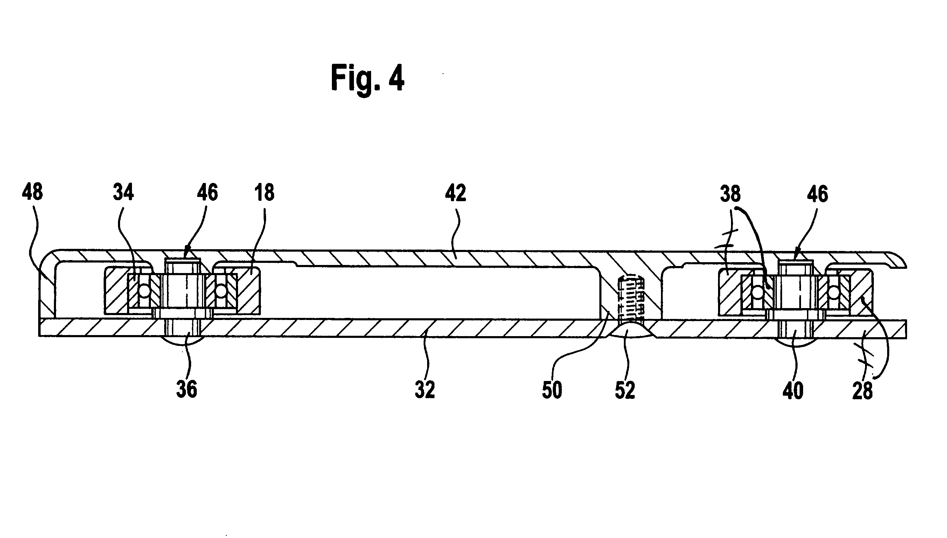

In Figur 4 ist ein Schnitt durch ein Befestigungsteil 22 entlang der beiden Lager 34, 38 gezeigt.

Die Bolzen 36, 40 sind in Lager 34, 38, typischerweise Kugel- oder Nadellager eingepresst. Die Lager 34, 38 wiederum sind in die Aussparungen der Kurbeln 18, 28 eingepresst und ringverstemmt. Die Bolzen 40, 36 selbst sind in die erste Platte 32 eingesetzt und vernietet. Die zweite Platte 42 sitzt deckel- oder hutartig auf der ersten Platte 32 die durch den Kragen 48 und die zylindrischen Erhebungen 50 von der ersten Platte 32 beabstandet ist. Natürlich kann der Kragen 48 auch über die erste Platte 32 hinausragen und damit die erste Platte 32 einschließen.

Die zweite Platte 42 weist jeweils Taschen 46 auf, in die Bolzen 36, 40 auf der der ersten Platte 32 abgewandten Seite eingreifen. Zur Befestigung der zweiten Platte 42 ist eine Schraube 52 in eine Bohrung der ersten Platte eingesetzt, die in das Gewinde der Erhebungen 50 eingeschraubt ist.

Figur 5 zeigt einen erfindungsgemäßen Wischerarm in einer perspektivischen Darstellung. An das Befestigungsteil 22 ist das Gelenkteil 26 angelenkt, welches an seinem, dem Befestigungsteil abgewandten Ende, ein nichtdargestelltes Wischblatt trägt. Das Befestigungsteil selbst besteht aus der ersten Platte 32 auf die die zweite Platte 42 aufgesetzt ist, so das der Kragen 48 auf der ersten Platte 32 aufsetzt. Das Gelenkteil 26 und das Befestigungsteil 22 sind weiterhin mittels einer Zugfeder 54 miteinander verspannt.

## Patentansprüche

1. Wischerarm (24), insbesondere für eine Scheibenwischvorrichtung (10) eines Kraftfahrzeugs, mit einem Befestigungsteil (22), welches mittels einer ersten Kurbel (18) und einer zweiten Kurbel (28) an zwei Punkten beweglich befestigbar ist, wobei das Befestigungsteil (22) zumindest eine erste Platte (32) und eine im wesentlichen parallel dazu angeordnete zweite Platte (42) aufweist und mindestens eine der Kurbeln (18, 28) drehbeweglich zwischen den Platten (32, 42) befestigt ist, **dadurch gekennzeichnet, dass** zumindest eine der Platten (32, 42) als Gussteil ausgebildet ist und eine. Tasche (46) aufweist, in die ein Bolzen (36, 40) eingreift, der mindestens eine der Kurbel (18, 28) drehbar lagert.

2. Wischerarm (24) nach Anspruch 1, **dadurch gekennzeichnet, dass** die Platten (32, 42) mittels mindestens eines Abstandsstutzens (50) verbunden sind.

3. Wischerarm (24) nach einem der vorhergehenden Ansprüche, **dadurch gekennzeichnet, dass** mindestens eine der Platten (32, 42) ein Loch aufweist, in die ein Bolzen (36, 40) eingreift, der mindestens eine Kurbel (18, 28) drehbar lagert.

4. Wischerarm (24) nach Anspruch 3, **dadurch gekennzeichnet, dass** der Bolzen (36, 40) zumindest eine der Platten (32, 42) in voller Länge durchgreift und auf der der Kurbel (18, 28) abgewandten Seite der Platte (32, 42) befestigt ist.

5. Wischerarm (24) nach einem der Ansprüche 3 bis 4, **dadurch gekennzeichnet, dass** mindestens ein Bolzen (36, 40) in ein Lager (34, 38) eingedrückt ist, welches weiterhin in eine Aussparung der Kurbel (18, 28) eingedrückt ist.

6. Scheibenwischvorrichtung, insbesondere für ein Kraftfahrzeug, **dadurch gekennzeichnet, dass** ein Wischerarm (24) nach einem der vorhergehenden Ansprüche vorgesehen ist.

## Claims

1. Wiper arm (24), in particular for a windscreen wiper device (10) of a motor vehicle, with a fastening part (22) which can be fastened moveably at two points by means of a first crank (18) and a second crank (28), wherein the fastening part (22) has at least one first plate (32) and a second plate (42) arranged substantially parallel thereto, and at least one of the cranks (18, 28) is fastened rotatably between the plates (32, 42), **characterized in that** at least one of the plates (32, 42) is designed as a cast part and has a recess (46) in which a bolt (36, 40) which mounts at least one of the cranks (18, 28) in a rotatable manner engages.

2. Wiper arm (24) according to Claim 1, **characterized in that** the plates (32, 42) are connected by means of at least one distance connecting piece (50).

3. Wiper arm (24) according to one of the preceding claims, **characterized in that** at least one of the plates (32, 42) has a hole in which a bolt (36, 40) which mounts at least one crank (18, 28) in a rotatable manner engages.

4. Wiper arm (24) according to Claim 3, **characterized in that** the bolt (36, 40) reaches through the entire length of at least one of the plates (32, 42) and is fastened on that side of the plate (32, 42) which faces away from the crank (18, 28).

5. Wiper arm (24) according to either of Claims 3 and 4, **characterized in that** at least one bolt (36, 40) is pressed into a bearing (34, 38) which is furthermore pressed into a cutout in the crank (18, 28).

6. Windscreen wiper device, in particular for a motor vehicle, **characterized in that** a wiper arm (24) according to one of the preceding claims is provided.

## Revendications

1. Bras d'essuie-glace (24) notamment pour un dispositif d'essuie-glace (10) d'un véhicule automobile comportant une pièce de fixation (22) fixée de manière mobile en deux points par l'intermédiaire d'une première manivelle (18) et d'une seconde manivelle (28),
la pièce de fixation (22) se compose d'au moins une première plaque (32) et d'une seconde plaque (42) installée pratiquement parallèlement à la première plaque et au moins l'une des manivelles (18, 28) est fixée de manière mobile en rotation entre les plaques (32, 42),
**caractérisé en ce qu'**
au moins l'une des plaques (32, 42) est une pièce de fonte et comporte un logement (46) dans lequel pénètre un goujon (36, 40) d'au moins l'une des manivelles (18, 28) montées à rotation.

2. Bras d'essuie-glace (24) selon la revendication 1,
**caractérisé en ce que**
les plaques (32, 42) sont reliées par l'intermédiaire d'au moins un goujon d'écartement (50).

3. Bras d'essuie-glace (24) selon les revendications précédentes,
**caractérisé en ce qu'**
au moins l'une des plaques (32, 42) comporte un orifice dans lequel pénètre un goujon (36, 40) d'au moins l'une des manivelles (18, 28) montée à rotation.

4. Bras d'essuie-glace (24) selon la revendication 3,
**caractérisé en ce que**
le goujon (36, 40) traverse sur toute sa longueur au moins l'une des plaques (32, 42) et est fixé au côté de la plaque (32, 42) opposé à la manivelle (18, 28).

5. Bras d'essuie-glace (24) selon les revendications 3 à 4,
**caractérisé en ce qu'**
au moins un goujon (36, 40) s'enfonce dans un palier (34, 38) lui-même enfoncé dans un orifice de la manivelle (18, 28).

6. Dispositif d'essuie-glace notamment pour un véhicule automobile,
**caractérisé en ce qu'**
il comporte un bras d'essuie-glace (24) selon l'une des revendications précédentes.
